Europäisches Patentamt

(19) European Patent Office

Office européen des brevets

(11) Numéro de publication: **0 109 470**

**A1**

(12) # DEMANDE DE BREVET EUROPEEN

(21) Numéro de dépôt: **82402111.7**

(51) Int. Cl.³: **B 29 D 31/00**

(22) Date de dépôt: **19.11.82**

(43) Date de publication de la demande:
**30.05.84 Bulletin 84/22**

(84) Etats contractants désignés:
**AT BE CH DE FR GB IT LI LU NL SE**

(71) Demandeur: **SARL SIGN**
**9, rue Sadi Carnot**
**F-59177 Sains-du-Nord(FR)**

(72) Inventeur: **Vauban, Henri**
**1 rue Raymond Poincaré**
**F-62120 Aire-sur-la-Lys(Pas-de-Calais)(FR)**

(74) Mandataire: **Lepage, Jean-Pierre**
**c/o BUGNION PROPRIETE INDUSTRIELLE SARL 23/25,**
**rue Nicolas Leblanc**
**F-59011 Lille Cédex 1 (Nord)(FR)**

(54) **Filière d'extrusion d'une gaine en matière thermo-plastique.**

(57) L'invention est relative à une filière d'extrusion d'une gaine de matière thermo-plastique présentant une structure lacunaire et une épaisseur de matière sensiblement continue. La filière présente un canal d'extrusion (3) délimité par un noyau (5) et une buse (6).

Elle est caractérisée par le fait qu'elle comprend une pluralité de couteaux (18 à 27 ...), répartis autour du canal d'extrusion (3) extérieurement à celui-ci, mobile dans un plan sensiblement perpendiculaire à l'axe de la filière, regroupés en jeux (11, 12...) indépendants selon au moins deux ensembles (18, 20, 22), (19, 21), les couteaux étant animés d'un mouvement cyclique alternatif, et venant obturer partiellement le canal d'extrusion en prenant appui contre la surface extérieure du noyau, et qu'elle comprend par ailleurs des moyens de commande cycliques susceptibles de décaler et de déphaser les uns par rapport aux autres les cycles de mouvement des différents ensembles de couteaux.

Ces moyens comprennent, par exemple, deux demi-couronnes (36 ou 37) dont le décalage angulaire est réglable, et qui commandent respectivement chaque ensemble de couteaux.

EP 0 109 470 A1

./...

Croydon Printing Company Ltd.

Fig 2

- 1 -

L'invention est relative à une filière d'extrusion d'une gaine en matière thermo-plastique, présentant une structure lacunaire, et une épaisseur de matière sensiblement continue.

Plus particulièrement, l'invention est relative à une filière qui permet de réaliser une gaine présentant une structure lacunaire, dont les mailles sont alignées sur des rangées sensiblement parallèles à la direction générale d'extrusion, et susceptibles d'être décalées parallèlement à cette direction d'une rangée à l'autre.

Par des découpes longitudinales, il est possible de réaliser à partir de cette gaine, par exemple, des grillages de signalisation pour des canalisations souterraines. Une gaine de structure lacunaire, dont les mailles ont une disposition décalée, et par exemple en quinconce, se prête mieux à l'étirage qui est réalisé en sortie de la filière, et les grillages réalisés à partir d'une telle gaine présentent une élasticité supérieure pour des sollicitations à la traction, et une limite de rupture plus élevée que les grillages dont les mailles sont alignées selon deux directions orthogonales.

Un autre avantage de la présente invention est que, lors de l'extrusion, les couteaux qui réalisent la structure lacunaire par obturation locale du canal d'extrusion, ne réalisent pas cette obturation simultanément, comme c'est le cas des filières actuellement existantes, mais d'une manière décalée. L'obturation simultanée de tous les couteaux provoque une résistance à l'extrusion de la matière en fusion, qui oblige à exercer sur cette matière une pression plus importante que dans le cas de la présente invention. En effet, dans le cas présent, l'obturation des couteaux est répartie le long de leur cycle de mouvement.

Par ailleurs, l'invention est relative à une filière d'extrusion, présentant un canal d'extrusion annulaire, pour laquelle les couteaux sont animés d'un mouvement radial, par rapport à l'axe de la filière, depuis l'extérieur. Une telle filière rend le réglage des couteaux, en particulier de la pression d'obturation qu'ils exercent au niveau du canal, et leur lubrification en cours d'extrusion beaucoup plus faciles que les filières à couteaux radiaux obturant le canal d'extrusion depuis l'intérieur.

Par ailleurs, l'entretien et le démontage des couteaux sont également facilités.

D'autres buts et avantages de la présente invention apparaîtront au cours de la description qui va suivre, qui n'est cependant donnée qu'à titre indicatif, et qui n'a pas pour but de limiter l'invention.

La filière d'extrusion, selon l'invention, d'une gaine de matière thermo-plastique, présentant une structure lacunaire et une épaisseur de matière sensiblement continue, comportant un canal d'extrusion formé par une fente annulaire délimitée par la surface extérieure d'un noyau et la surface intérieure d'une buse, la surface extérieure du noyau faisant saillie par rapport à la surface intérieure de la buse au niveau de l'extrémité du canal, est caractérisée par le fait qu'elle comprend une pluralité de couteaux, répartis autour du canal, extérieurement à celui-ci, mobiles dans un plan sensiblement perpendiculaire à l'axe de la filière, regroupés en jeux indépendants selon au moins deux ensembles, les couteaux étant animés d'un mouvement cyclique alternatif et venant obturer partiellement le canal d'extrusion au cours de ce mouvement en prenant appui contre la surface extérieure du noyau, et qu'elle comprend par ailleurs des moyens de commande cycliques susceptibles de décaler les uns par rapport aux autres les cycles de mouvement des ensembles de couteaux.

L'invention sera mieux comprise si l'on se réfère à la description ci-dessous, ainsi qu'aux dessins en annexe qui en font partie intégrante.

La figure 1 représente schématiquement une vue de côté de la filière selon l'invention, selon la coupe A-A repérée en figure 2, dans un mode non limitatif de réalisation.

La figure 2 représente la filière vue de dessus, en coupe B-B, des coupes partielles selon les plans repérés en C, D, E, F, G, en figure 1, ayant été réalisés au niveau des couteaux et des moyens de commande des couteaux.

La figure 3 schématise, non limitativement, la structure lacunaire de la gaine immédiatement après extrusion.

La figure 4 schématise la structure de la figure 3 après étirage.

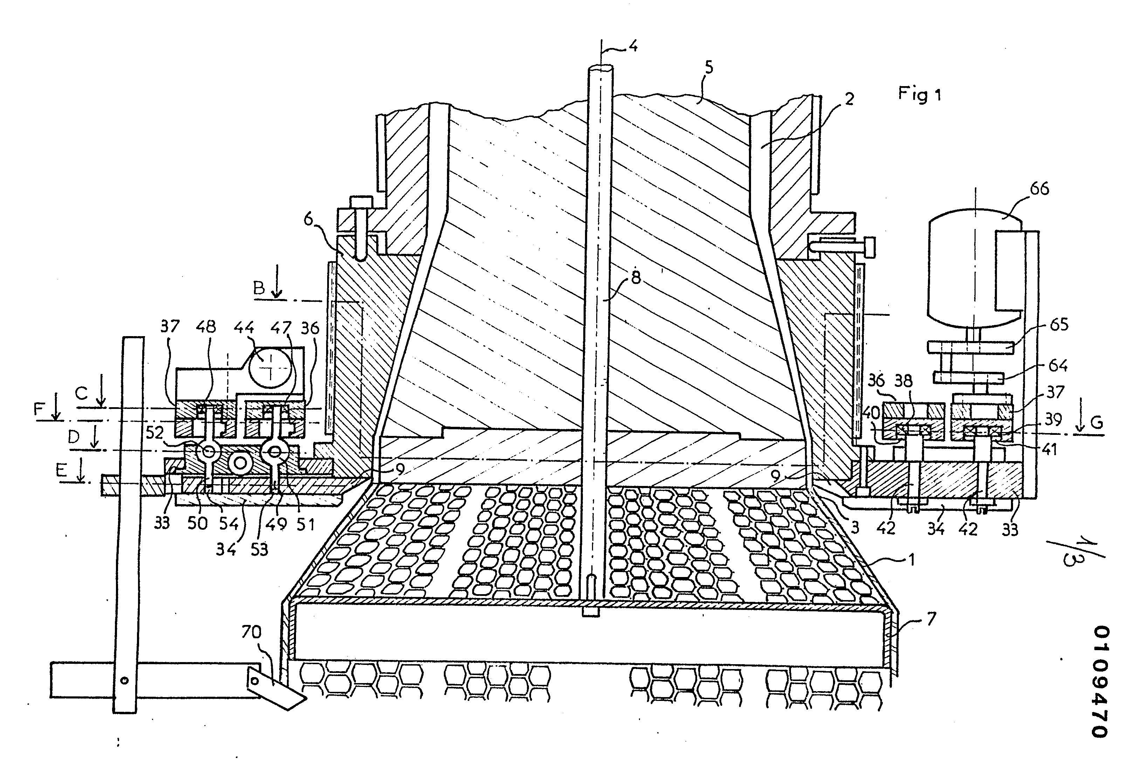

En figure 1, on a représenté schématiquement une filière selon l'invention. Cette filière est destinée à extruder une gaine 1 de matière tnermo-soudable telle que par exemple du polyéthylène ou du polypropylène.

La filière présente un canal d'extrusion 2, qui, de préférence, dans sa partie extrême 3 présente une forme circulaire autour de l'axe de la filière 4.

Le canal d'extrusion 2 est délimité par la surface extérieure d'un noyau 5, et par la surface intérieure d'une buse 6. Ces éléments sont connus de l'Homme de l'Art et ne seront pas décrits plus en détail.

Il faut cependant remarquer que, de préférence, au niveau de la partie extrême 3 du canal d'extrusion 2, le noyau 5 fait saillie par rapport à l'extrémité de la buse 6.

Tel que cela est également connu, un plateau 7, par exemple relié au noyau par un axe 8 coaxialement à celui-ci, sert de calibrage pour réaliser l'étirage de la gaine après son extrusion. Ce plateau est réglable en hauteur, au moyen de l'axe 8. Par ailleurs, il est interchangeable, ce qui permet d'étirer la gaine 1 selon un allongement variable et réglable.

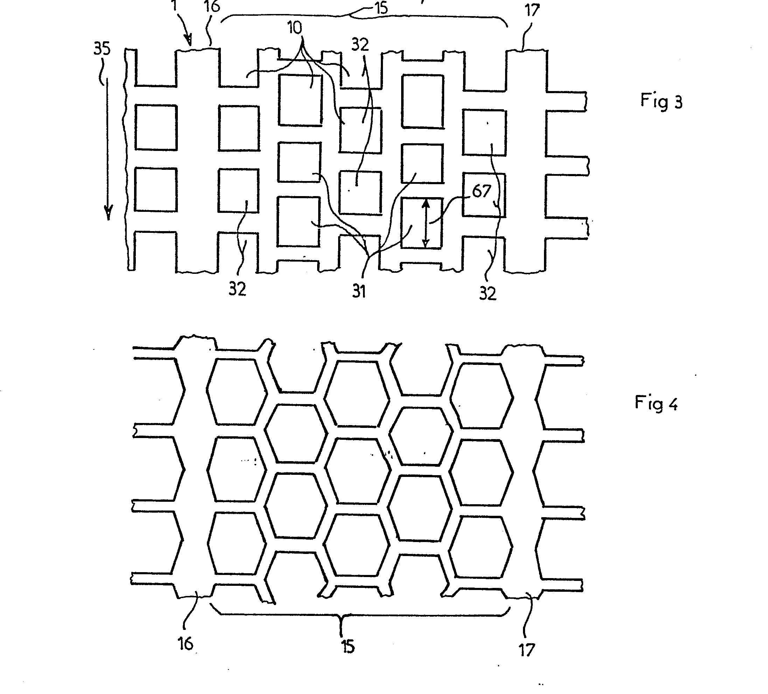

Le canal d'extrusion 2, plus précisément au niveau de sa partie extrême 3 est obturé localement et cycliquement par des couteaux 9. Ces couteaux réalisent dans le grillage des jours 10, tel que cela est schématisé en figure 3.

Les couteaux sont répartis sur la périphérie extérieure du canal d'extrusion 2, au niveau de son extrémité 3. Il faut remarquer que ce mode d'obturation du canal d'extrusion permet d'obtenir une gaine dont l'épaisseur de matière est sensiblement constante, contrairement aux filières de ce type qui présentent deux canaux d'extrusion distincts, respectivement munis de couteaux, et qui fonctionnent par superposition de matière à partir de ces deux canaux.

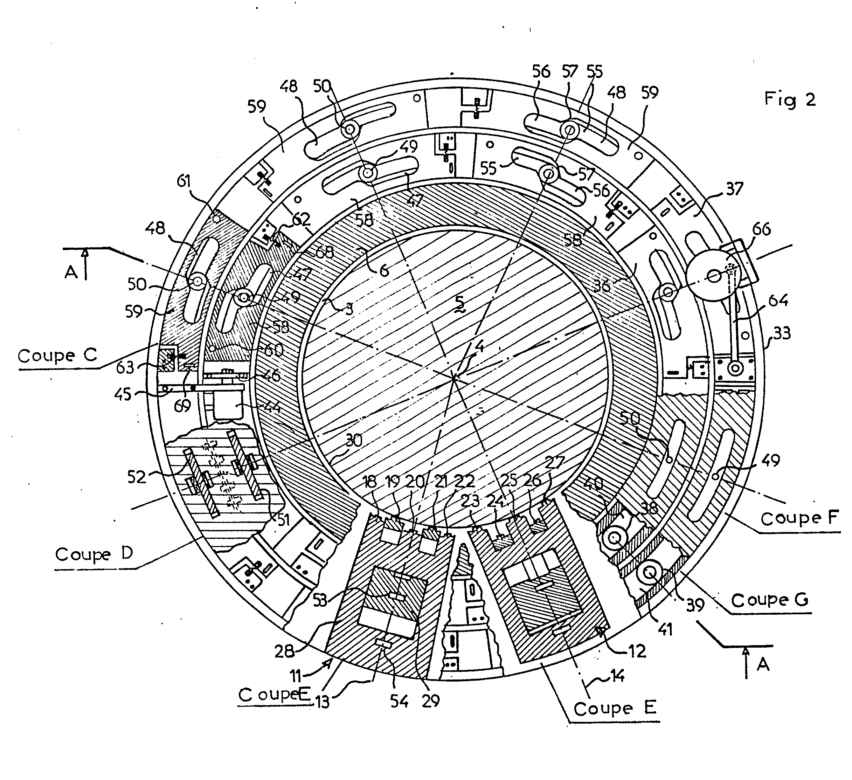

Les couteaux 9 sont du type radial, c'est-à-dire que leur déplacement s'effectue sensiblement dans un plan perpendiculaire à l'axe 4 de la filière. Selon l'invention, les couteaux sont regroupés par jeux. A titre d'illustration, dans la figure 2, deux jeux de couteaux 11 et 12 ont été représentés dans une coupe selon E de la figure 1.

De préférence, les jeux de couteaux sont respectivement symétriques par rapport à un plan radial, schématisé en 13 pour le jeu 11 et en 14 pour le jeu 12. Dans un mode préférentiel de réalisation, les plans radiaux des différents jeux de couteaux forment deux à deux des dièdres d'angle au centre sensiblement égaux, et par exemple à 45 degrés, tel que cela est représenté en figure 2. Ainsi, dans le cas des figures, la filière présente huit jeux de couteaux. Ce nombre, cependant, n'est pas limitatif, et la filière pourrait comporter un nombre supérieur ou inférieur de jeux.

Pour la portion de gaine représentée en figure 3, un jeu de couteaux réalise le secteur repéré en 15, qui présente une structure lacunaire. L'espace entre le jeu de couteaux qui a réalisé le secteur 15 et les jeux situés de part et d'autre de celui-ci correspondent aux bandes continues 16 et 17. Ces bandes sont susceptibles de constituer des bandes de renforcement longitudinales de la gaine.

Selon l'invention, pour chaque jeu, les couteaux sont répartis selon deux ensembles, de préférence symétriques par rapport au plan radial qui définit là position des jeux.

A titre d'illustration, les jeux 11 et 12 ont été représentés respectivement avec cinq couteaux, 18 à 22 pour le jeu 11 et 23 à 27 pour le jeu 12. Pour le jeu 11, les couteaux extrêmes 18 et 22, et le couteau central 20 constituent un premier ensemble, l'autre étant constitué par les couteaux intermédiaires 19 et 21. Il en est de même pour le jeu 12, où les couteaux 23, 25 et 27 forment le premier ensemble et les couteaux 24 et 26 le second.

Naturellement, le nombre de couteaux par jeu , et même par ensemble n'est pas limitatif, et n'est donné qu'à titre d'illustration.

Les couteaux d'un même ensemble sont de préférence solidarisés entre eux et présentent un corps commun. Ce corps est schématisé dans les figures en 28, pour les couteaux 18, 20 et 22, et en 29 pour les couteaux 19 et 21. Il en est de même pour les autres jeux.

Pour un même jeu, chaque ensemble de couteaux est mobile indépendamment de l'autre. Le mouvement est un mouvement de translation alternatif, selon une direction radiale par rapport à l'axe 4 de la filière. Ainsi, à titre d'exemple, les deux ensembles de couteaux du jeu 11 sont mobiles en translation alternativement, parallèlement à l'axe schématisé en 13 dans la figure 2.

Les couteaux obturent l'extrémité 3 du canal d'extrusion 2 en prenant appui contre la surface extérieure 30 du noyau 5 à ce niveau. De ce fait, ils présentent respectivement une extrémité dont la courbure est sensiblement égale à la courbure de la surface extérieure 30 du noyau 5, et dont le centre de courbure se trouve confondu avec la trace de l'axe 4 de la filière dans le plan de la figure 2, lorsque les couteaux sont en appui contre le noyau.

Par ailleurs, avantageusement, tel que cela est schématisé en figure 2, les ensembles de couteaux d'un même jeu se guident mutuel-

0109470

- 5 -

lement dans leur mouvement de translation, par exemple au niveau de leurs corps respectifs.

A titre d'illustration, les jeux de couteaux 11 et 12 ont été respectivement représentés dans des positions extrêmes opposées. Pour le jeu 11, les couteaux intermédiaires 19 et 21 sont en position d'obturation, et les couteaux 18, 20 et 22 sont en retrait par rapport au canal d'extrusion. Pour le secteur schématisé en 15 dans la figure 3, cette position correspond à la réalisation des jours 31.

Pour le jeu 12, les couteaux 23, 25 et 27 sont en position d'obturation, et les couteaux 24 et 26 sont en retrait du canal d'extrusion. Pour le secteur 15, cette position correspond à la réalisation des jours 32.

Les ensembles de couteaux sont reliés à la buse 6 de la filière par tout moyen approprié, et par exemple par un plateau annulaire 33, coaxial à la buse et au noyau, solidarisé à la buse 6, et muni de saignées radiales qui constituent les logements des ensembles de couteaux et leur fournissent des moyens de guidage latéraux.

Des moyens de glissement tels que par exemple des glissières à aiguilles sont de préférence intercalés entre les couteaux et le plateau 33. Par ailleurs, avantageusement, le plateau 33 est réalisé en plusieurs pièces, et des contreplaques 34, démontables et indépendantes permettent l'accès à chaque ensemble de couteaux, et donc leur démontage, leur entretien. Ainsi, chaque jeu de couteaux est indépendant, et pourra être entretenu, éventuellement interchangé séparément.

Cependant, de préférence, les moyens de commande des ensembles correspondants de couteaux, pour les différents jeux, sont communs, et leur mouvement respectif est sensiblement simultané. Ainsi, dans le cas des jeux représentés en figure 2, les ensembles de couteaux intermédiaires tels que 19 et 21 ont un mouvement simultané. Il en est de même pour les ensembles de couteaux tels que 18, 20 et 22. Les jeux 11 et 12 ont été représentés dans des positions extrêmes opposées, en illustration de ces positions, et non en illustration des moyens de commande qui vont maintenant être décrits.

Selon l'invention, les moyens de commande sont cycliques. Pour les différents jeux, les cycles des ensembles de couteaux qui les constituent ont la même période, mais sont déphasés l'un par rapport à l'autre. De préférence, ils sont en opposition de phase. Cependant, tel que cela apparaîtra ultérieurement, le déphasage est en fait réglable.

Ce déphasage provoque le décalage parallèlement à la direction générale d'extrusion schématisé en 35 dans la figure 3 d'une rangée de jours, par rapport à une rangée adjacente. Ainsi, pour le secteur 15, les jours 31 sont décalés parallèlement à la direction 35 par rapport aux jours 32.

Ce décalage est particulièrement avantageux, étant donné que l'étirage de la gaine ne résultera pas uniquement en un allongement des brins qui délimite ces mailles, mais cet allongement sera accompagné d'une déformation. Il sera par exemple possible d'obtenir une gaine dont les mailles présentent approximativement une forme hexagonale, et où elles sont disposées en quinconce, tel que cela a été schématisé à titre d'illustration dans la figure 4. Un grillage, par exemple réalisé par découpage longitudinal de la gaine présente donc un allongement et une élasticité supérieure à un grillage dont les mailles sont alignées dans deux directions orthogonales.

L'entraînement des ensembles de couteaux est de préférence réalisé à partir de deux demi-couronnes 36 et 37, sensiblement coaxiales entre elles et à la filière, et mobiles en rotation autour de son axe 4. Elles sont respectivement portées et guidées dans leur mouvement de rotation, par exemple par des roulements 38 et 39, respectivement logés dans des rainures annulaires 40 et 41, situées au niveau de leur face inférieure. De préférence, les roulements sont respectivement montés sur le plateau 33 au moyen d'axes 42 excentrés, ce qui permet de régler le centrage de chaque demi-couronne par rapport à l'axe de la filière. Les deux demi-couronnes sont reliées entre elles par des moyens qui permettent de régler le décalage angulaire de l'une par rapport à l'autre. A titre d'exemple, ces moyens ont été schématisés par un vérin 44 orienté sensiblement tangentiellement par rapport aux deux demi-couronnes, dont le corps est solidaire de l'une, par une plaque 45, et la tige solidaire de l'autre, par une plaque 46. Eventuellement, des butées réglables limitent la course du vérin. Naturellement, tout autre moyen approprié convient.

Le mouvement de rotation des demi-couronnes peut être continu ou alternatif. La suite de la description va être donnée pour un mouvement alternatif, qui est préféré par l'invention. L'Homme de l'Art est susceptible, d'après ce qui va être décrit, de réaliser les adaptations nécessaires pour un mouvement continu.

Chaque demi-couronne est pourvue de portions de rainures, 47 pour la demi-couronne 36 et 48 pour la demi-couronne 37. Les portions de rainures 48 sont sensiblement identiques. Il en est de même pour les portions 47.

Une rainure 47 est associée à une rainure 48, tel que cela est schématisé en figure 2, et cette association est adjointe à un jeu de couteaux. Ainsi, chaque association de rainures 47 et 48 est approximativement à l'aplomb vertical d'un jeu de couteaux lorsque les demi-couronnes sont en position centrale. Chaque rainure est alors affectée à un ensemble de couteaux de ce jeu.

Des leviers 49 et 50, respectivement articulés par rapport à des axes 51 et 52, orientés tangentiellement par rapport aux demi-couronnes, et situés, par exemple, au niveau du plateau 33, assurent la liaison entre les portions de rainures et les ensembles correspondants des couteaux.

A titre d'exemple, l'extrémité supérieure d'un levier 49 décrit une portion de rainure 47, et son extrémité inférieure se loge dans une lumière 53 d'un ensemble de couteaux. L'extrémité supérieure d'un levier 50 décrit une rainure 48, et son extrémité inférieure est logée dans une lumière 54 de l'autre ensemble de couteaux.

Les rainures sont respectivement constituées de trois parties, à savoir deux parties rectilignes 55 et 56, ou présentant une courbure sensiblement parallèle à la demi-couronne qui les porte , et situées à une distance différente de l'axe 4, reliées de manière continue par une partie oblique 57. A titre d'exemple, dans la figure 2, les parties 55 sont plus éloignées de l'axe que les parties 56. De manière évidente, lorsque l'extrémité supérieure des leviers 49 et 50 se trouve dans les parties 55 de leur portion de rainures respectives, les couteaux correspondants sont en position d'obturation. Ils sont en retrait par rapport au canal d'extrusion 3 lorsque leur levier se trouve dans les parties 56 plus proches de l'axe.

Tel que cela est représenté en figure 2, les portions de rainures 47 et 48 d'une association sont disposées d'une manière inversée.

De préférence, les portions de rainures 47 et 48 sont respectivement portées par des segments, 58 pour les portions 47 et 59 pour les portions 48. Ces segments 58 et 59 sont respectivement mobiles en rotation dans le plan de la figure 2 par rapport à des axes 60 et 61, respectivement solidaires des demi-couronnes qui les portent. Par ailleurs, des moyens de rappel élastiques, tels que des ressorts 62 et 63 rappellent élastiquement chaque segment 58 et 59 en direction de l'axe de la filière. Eventuellement, le mouvement des segments 58 et 59 est limité par un ensemble butée (non représentée)-lumière, respectivement 68 et 69.

La différence de distance à l'axe 4 des parties 55 et 56 de chaque portion de rainures détermine la course des ensembles de couteaux correspondants. Cette distance est en fait supérieure à la course des couteaux, et le surplus est absorbé par les moyens de rappel élastiques 62 et 63. Ainsi, ceci permet tout d'abord d'exercer une pression excédentaire sur les couteaux, en position d'obturation, et également de compenser la dilatation des différents éléments de la filière.

Le mouvement des deux demi-couronnes est de préférence réalisé au moyen d'une bielle 64, articulée à l'une de ses extrémités à l'une des demi-couronnes, et à l'autre extrémité, de manière excentrée, à un plateau ou une manivelle 65, entraîné en rotation par un moteur 66. De préférence, les phases de vitesse linéaire maximum de ces moyens d'entraînement correspondent à une phase transitoire du mouvement des couteaux, entre leur position d'obturation et leur position de retrait. En d'autres termes, les points morts de ces moyens correspondent à une position d'obturation d'un ensemble de couteaux, et une position de retrait de l'autre ensemble. La vitesse de rotation du moteur détermine en particulier la durée d'obturation du canal d'extrusion par les différents couteaux, et donc la longueur 67 des mailles, en fonction de la vitesse d'extrusion de la gaine. L'Homme de l'Art est à même de déterminer ces différents paramètres.

D'autre part, tel que cela se déduit de la figure 3, le canal d'extrusion se trouve à tout moment obturé par au moins un jeu de couteaux. Cette obturation est désavantageuse lors du début de l'extrusion où il est nécessaire, au moins au démarrage, de sortir une gaine continue. C'est la raison pour laquelle l'invention préfère des moyens de couplage tels qu'un vérin 44. En effet, lors du démarrage, le décalage angulaire des demi-couronnes est annulé au moyen du vérin 44, éventuellement d'une butée, et le moteur 66 est à l'arrêt, l'ensemble étant positionné de manière à ce que tous les couteaux soient en retrait par rapport au canal d'extrusion. A la fin de cette phase de démarrage, le vérin 44 est actionné, de manière à réaliser un décalage angulaire entre les

deux demi-couronnes, correspondant par exemple à une opposition de phase. Cette position pourra être également définie par une butée réglable. Ceci correspond à la mise en position d'obturation de l'un des ensembles de couteaux. Le moteur est alors alimenté, et le mouvement alternatif des deux demi-couronnes, et leur décalage angulaire, réalisent une obturation alternative du canal d'extrusion au moyen des deux ensembles des jeux de couteaux.

De préférence, tel que cela est schématisé en figure 1, après l'étirage, la gaine est découpée longitudinalement par des moyens de découpe réglables en hauteur, schématisés en 70. Ces moyens de découpe peuvent être uniques ou plusieurs moyens de découpe peuvent être répartis sur la périphérie de la gaine. De préférence, la gaine est découpée au niveau d'une bande de renforcement 16 ou 17. Un grillage est donc réalisé à partir de cette gaine, et peut être avantageusement utilisée comme grillage de signalisation pour des canalisations enterrées.

L'invention permet donc, par le mouvement alterné des ensembles des jeux de couteaux de répartir dans le temps la résistance qu'ils opposent à l'extrusion de la gaine, et donc de diminuer globalement cette résistance par rapport à une filière dont les couteaux sont animés d'un mouvement simultané.

Par ailleurs, le regroupement des couteaux en jeux, et la disposition de ces jeux extérieurement au canal d'extrusion permet un réglage et un entretien particulièrement faciles, étant donné que chaque jeu de couteaux est accessible indépendamment de l'autre. D'autre part, un changement de couteaux, ou plus précisément d'ensemble ou de jeu de couteaux demande un minimum de temps d'arrêt de l'extrusion.

Naturellement, la présente description n'est donnée qu'à titre indicatif, et l'on pourrait adopter d'autres mises en oeuvre de l'invention sans pour autant sortir du cadre de celle-ci. En particulier, les jeux de couteaux pourraient comporter plus de deux ensembles. Dans ce cas, le nombre des "demi-couronnes" correspondrait au nombre des ensembles de couteaux par jeu. Par ailleurs, les demi-couronnes pourraient être animées d'un mouvement de rotation continu . Dans ce cas, les portions de rainures seraient transformées en des rainures continues. D'autre part, les deux demi-couronnes pourraient être remplacées par une seule couronne munie de deux jeux de portions de rainures, dont l'un est décalé angulairement par rapport à l'autre en correspondance avec le déphasage désiré des ensembles de couteaux associés.

0109470

- 10 -

REVENDICATIONS

1. Filière d'extrusion d'une gaine de matière thermo-plastique, présentant une structure lacunaire, et une épaisseur de matière sensiblement continue, comportant un canal d'extrusion formé par une fente annulaire qui est délimitée par la surface extérieure d'un noyau et la surface intérieure d'une buse, la surface extérieure du noyau faisant saillie par rapport à la surface intérieure de la buse au niveau de la fente, caractérisée par le fait qu'elle comprend une pluralité de couteaux répartis autour du canal, extérieurement à celui-ci, mobiles dans un plan sensiblement perpendiculaire à l'axe de la filière, regroupés en jeux indépendants selon au moins deux ensembles, les couteaux étant animés d'un mouvement cyclique alternatif, et venant obturer partiellement le canal d'extrusion en prenant appui contre la surface extérieure du noyau, et qu'elle comprend par ailleurs des moyens de commande cycliques, susceptibles de décaler et de déphaser les uns par rapport aux autres les cycles de mouvement des ensembles des jeux de couteaux.

2. Filière selon la revendication 1, caractérisée par le fait que chaque jeu de couteaux est symétrique par rapport à un plan vertical passant par l'axe de la filière, qu'il comprend au moins deux ensembles de couteaux respectivement symétriques par rapport à ce plan, la commande des couteaux d'un ensemble étant simultanée, et le cycle de commande de chaque ensemble étant susceptible d'être décalé et déphasé par rapport à l'autre.

3. Filière selon la revendication 2, caractérisée par le fait que les couteaux d'un jeu sont mobiles en translation dans un plan sensiblement perpendiculaire à l'axe de la filière, selon une direction sensiblement parallèle au plan de symétrie, et qu'ils présentent respectivement une extrémité courbe dans le plan perpendiculaire à l'axe de la filière, dont le rayon de courbure est sensiblement égal à celui de la surface extérieure du noyau, et le centre de courbure sensiblement confondu avec l'axe de la filière lorsque les couteaux sont en appui contre le noyau.

4. Filière selon la revendication 3, caractérisé par le fait que les ensembles de couteaux, qui constituent un jeu de couteaux se guident mutuellement dans leur mouvement de translation respectif.

5. Filière selon l'une quelconque des revendications précédentes, caractérisée par le fait que les moyens de commande comprennent une couronne coaxiale à la filière et située à l'extérieur du canal, mobile en rotation, pourvue de moyens de guidage distincts pour chaque ensemble de couteaux symétriques des jeux.

6. Filière selon la revendication 5, caractérisée par le fait que le mouvement de rotation de la couronne est alternatif, un cycle de ce mouvement correspondant à un cycle de déplacement de chaque ensemble de couteaux des jeux.

7. Filière selon la revendication 6, caractérisée par le fait que le mouvement alternatif de la couronne est provoqué par un ensemble bielle-manivelle, et que les points morts de ce mouvement correspondent aux positions extrêmes des couteaux, en position d'obturation ou de retrait.

8. Filière selon l'une quelconque des revendications 5 ou 6, caractérisée par le fait que les moyens de guidage de la couronne sont des rainures dont la distance par rapport à l'axe de la filière varie sur leur longueur, dans lesquelles sont respectivement engagées les extrémités de levier articulé par rapport à un axe sensiblement perpendiculaire à un rayon de la filière, dont l'autre extrémité est reliée respectivement aux ensembles de couteaux des jeux.

9. Filière selon la revendication 8, caractérisée par le fait que les rainures sont portées respectivement par des segments amovibles reliés à la couronne.

10. Filière selon la revendication 9, caractérisée par le fait que les segments de couronne sont articulés par rapport à la couronne qui les portent par un axe sensiblement parallèle à l'axe de la filière, et rappelés par des moyens élastiques en direction de l'axe de la filière.

11. Filière selon l'une quelconque des revendications précédentes, caractérisée par le fait que la couronne est composée d'au moins deux couronnes secondaires, ou "demi-couronnes", axiales, respectivement associées aux ensembles correspondants des jeux de couteaux, et que des moyens permettent de régler leur décalage angulaire les unes par rapport aux autres, et donc le déphasage des cycles de mouvement des ensembles correspondants des jeux de couteaux.

12. Filière selon la revendication 11, caractérisée par le fait que les couronnes secondaires, ou "demi-couronnes", sont portées par des axes excentriques qui permettent de régler leur centrage par rapport à la filière.

13. Filière selon l'une quelconque des revendications pré-

- 12 -

cédentes, caractérisée par le fait qu'elle comprend une pluralité de jeux de cinq couteaux, regroupés en deux ensembles comprenant respectivement les deux couteaux extrêmes et le couteau central d'une part, les deux couteaux intermédiaires d'autre part que les couteaux de chaque ensemble présentent un corps commun, et que les cycles de mouvements des deux ensembles des jeux sont en opposition de phase.

Fig 1

0109470

1/3

Fig 2

Coupe C
Coupe D
Coupe E
Coupe E
Coupe F
Coupe G

2/3

0109470

0109470

Fig 3

Fig 4

**0109470**

Numéro de la demande

## Office européen des brevets

## RAPPORT DE RECHERCHE EUROPEENNE

EP   82 40 2111

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 504 850  (STE SIGN) <br> * Document complet * | 1-13 | B 29 D   31/00 |
| Y | FR-A-1 580 054  (NORDDEUTSCHE SEEKABELWERKE AG) <br> * Figures 3, 4 * | 1 | |
| Y | FR-A-2 349 432  (J. HUREAU et al.) <br> * Figures 3, 4 * | 1 | |
| A | DE-B-1 204 391  (G.S. NALLE) <br> *   Colonne  5,  lignes  53-68 ; colonne  6, lignes 1-37 ; figures 7, 8 * | 1,7 | |
| A | FR-A-2 138 198  (J. HUREAU) | | |
| A | FR-A-2 159 188  (J.C. HUREAU) | | |
| A | DE-A-2 127 295  (GENERALE ALIMENTAIRE) | | |

DOMAINES TECHNIQUES RECHERCHES (Int. Cl. ³)

B 29 C   17/00
B 29 D   31/00

Le présent rapport de recherche a été établi pour toutes les revendications

| Lieu de la recherche <br> BERLIN | Date d'achèvement de la recherche <br> 24-06-1983 | Examinateur <br> FINDELI B.F.C |
|---|---|---|